# EUROPEAN PATENT APPLICATION

(11) **EP 3 617 877 A1**
(43) Date of publication of application: **04.03.2020**
(21) Application number: 19192295.4
(22) Date of filing: 19.08.2019
(51) Int. Cl.: G06F 9/455

(54) **CLOUD MIGRATION**

(30) Priority: 30.08.2018 US 201816118205
(71) Applicant: Hewlett Packard Enterprise Development LP, Houston, TX 77070 (US)
(72) Inventor: CHANDRASHEKAR, Charan Acharya, 560048 Bangalore (IN)
(74) Representative: Haseltine Lake Kempner LLP

(57) **Abstract**

Example techniques of cloud migration are described. In an example, a migration request is received. The migration request is indicative of a destination cloud network and a compute node to be migrated from a source cloud network to the destination cloud network. A virtual machine (VM) information of the compute node is determined based on the migration request. The VM information is indicative of a VM hosted at the compute node in the source cloud network, a storage volume associated with the VM, and a network address associated with the VM. The compute node, the VM, the storage volume, and the network address are registered in the destination cloud network, based on the migration request and the VM information. The compute node, the VM, the storage volume, and the network address are deregistered from the source cloud network.

## Description

### Background

A cloud network enables communication between components in a cloud computing infrastructure and external users, applications, or services. Resources and operations of the cloud network are facilitated by the cloud computing infrastructure. A cloud network can enable connection between a remote user and a cloud application (Software as a Service) or a remote user and a cloud infrastructure (Infrastructure as a Service).

### BRIEF DESCRIPTION OF DRAWINGS

The following detailed description references the drawings, wherein:
Fig. 1 illustrates a system for cloud migration, according to an example;
Fig. 2 illustrates a multi-cloud environment, according to an example;
Fig. 3 illustrates a method for cloud migration, according to an example;
Fig. 4 illustrates a method for registering a compute node, a VM hosted by the compute node, a storage volume associated with the VM, and a network address associated with the VM in a destination cloud network, according to an example; and
Fig. 5 illustrates a system environment implementing a non-transitory computer readable medium for cloud migration, according to an example.

### DETAILED DESCRIPTION

A cloud network may include physical computing resources which may act as host systems, also called compute nodes. The cloud network may also include a storage pool formed of multiple storage systems which are part of the cloud network. Each compute node can deploy a hypervisor to enable multiple virtual machines (VMs) to be run on a single compute node. A compute node may thus provide storage, networking, memory, and processing resources that can be consumed by virtual machines (VMs) hosted by the compute node. A hypervisor or a virtual machine monitor (VMM) includes a computer software, firmware, hardware, or a combination thereof that can create and run VMs. Each VM running on a hypervisor can execute its own operating system and can be associated with a certain section of the storage pool. Each VM may run different applications and services. The hypervisor provides a virtual operating platform for the VMs, manages execution of the operating systems of the VMs, and enables sharing of virtualized hardware resources of the compute node among the VMs, such that different operating systems of different VMs can run on a single compute node.

Multiple cloud networks and storage resources are sometimes grouped in a single heterogeneous architecture referred to as a multi-cloud environment. In the multi-cloud environment, cloud assets, software, applications, etc., may be distributed across several cloud networks. The multi-cloud environment may include cloud networks or cloud hosting environments provided by different cloud service providers. In the multi-cloud environment, the different cloud networks may be managed by a multi-could management platform. The multi-cloud management platform includes hardware, software, firmware, or a combination thereof which provides a unified interface for deployment, provisioning, and monitoring of different cloud networks in the multi-cloud environment.

In the multi-cloud environment, the number of compute nodes deployed in one cloud network may be more, as compared to the number of compute nodes deployed in other cloud networks. The cloud network, with more number of compute nodes, may suffer from performance and bandwidth issues due to heavy data traffic load. Hence, to balance data traffic load among different cloud networks, services, applications, or VMs running in the cloud network with greater number of compute nodes, may be migrated to another cloud network in the multi-cloud environment. Further, services, applications, or VMs running in compute nodes deployed in a cloud network, subscription to which is high, may be migrated to another cloud network which has reasonable subscription rates, to reduce expenditure on cloud services. Also, when maintenance activity is carried out in a cloud network, compute nodes and VMs in that cloud network may be migrated to another cloud network in the multi-cloud environment. Therefore, VMs, services, or applications, may be migrated between cloud networks in the multi-cloud environment due to various reasons, such as, to balance data traffic load between cloud networks, to enable maintenance activity on the cloud networks, and due to cost concerns.

Migration of VMs and application(s) between cloud networks may result in downtime to VMs or application(s) being migrated. Also, the storage space and network credentials associated with the migrated VMs are to be remapped after migration. In cases where an entire compute node is to be migrated from one cloud network to other cloud network, generally, each VM in the compute node is individually migrated to the other cloud network. Migrating each VM individually involves downtime for each VM of the compute node which may result the compute node to remain in an offline state during the migration. The offline state refers to a condition of the compute node, when the compute node is unavailable to receive requests or commands from users and network administrators. While the compute node is in the offline state, resources of the compute node may not be available to receive and handle requests relating to updation of the VMs or its associated network and storage. Further, such migration involves a network administrator's manual effort in identifying the VMs in the compute node, individually migrating each of the identified VMs to the other cloud network, and reallocating or reassigning storage and network resources to the individual VMs after migration.

The present disclosure describes approaches in which, an entire compute node along with its hosted VMs and storage and network resources associated with the VMs may be migrated from a source cloud network to a destination cloud network without the compute node going in an offline state during migration. Thus, the compute node remains in an online state during migration. The online state refers to a condition of the compute node, when the compute node is available to receive requests or commands from users and network administrators. Since, the compute node remains in the online state during migration, the compute node and its VMs may receive requests, relating to updation of the VMs, from network administrator(s), thereby reducing downtime of the compute node during migration. Also, the VMs are maintained in the compute node with their respective network and storage resources remaining intact while being shifted to the destination cloud network. Further, the migration takes place without any manual intervention by the network administrator during the migration. Thus, the network administrator's efforts in migrating each VM individually may be eliminated.

The present disclosure describes example implementations of migration of a compute node from a source cloud network to a destination cloud network. The source cloud network refers to a cloud network hosting a compute node to be migrated and the destination cloud network refers to the cloud network which will be hosting the compute node after migration. In an example, a migration request is received by a computing system. In an example, the computing system may be an electronic device, such as a desktop, a laptop, a tablet, a handheld device, etc., capable of processing computer readable instructions. The computing system includes a processor which may implement a multi-cloud management platform in a multi-cloud environment including the source cloud network and the destination cloud network. The migration request is indicative of the destination cloud network and the compute node that is to be migrated from the source cloud network to the destination cloud network. A virtual machine (VM) information of the compute node is determined based on the migration request. The VM information indicates a VM hosted at the compute node in the source cloud network, a storage volume associated with the VM, and a network address associated with the VM. The compute node, the VM, the storage volume, and the network address is registered in the destination cloud network, based on the migration request and the VM information. The compute node, the VM, the storage volume, and the network address are deregistered from the source cloud network.

During cloud migration, as per the present technique, the compute node remains online and can receive requests relating to updation of the VMs or its associated network and storage. Thus, the compute node remains available to the users/network administrators while it is migrated to the destination cloud network. Also, since the migration request is not received or processed by the compute node itself, therefore, processing capabilities of the compute node are not consumed for migration. Thus, processing capabilities of the compute node remain available for consumption by its hosted VMs for servicing application requests, even during the migration.

The following detailed description refers to the accompanying drawings. Wherever possible, the same reference numbers are used in the drawings and the following description to refer to the same or similar parts. While several examples are described in the description, modifications, adaptations, and other implementations are possible. Accordingly, the following detailed description does not limit the disclosed examples. Instead, the proper scope of the disclosed examples may be defined by the appended claims.

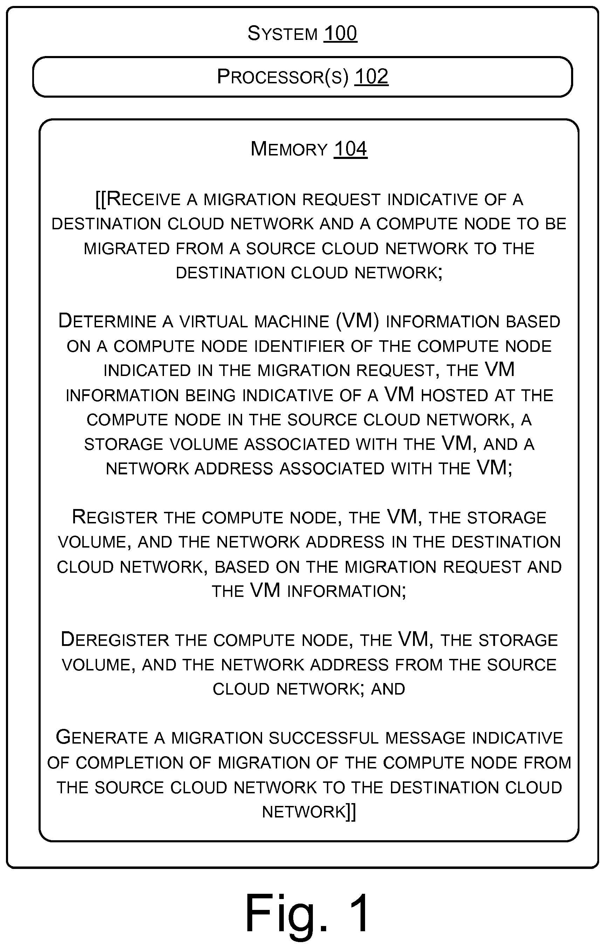

Fig. 1 illustrates a system 100 for cloud migration, according to an example. The system 100 may be an electronic device, such as a desktop, a laptop, a tablet, a handheld device, etc., capable of processing computer readable instructions. In an example, the system 100 may be a computer running a multi-cloud management platform in a multi-cloud environment.

The system 100 includes a processor 102 and a memory 104 coupled to the processor 102. The memory 104 stores instructions executable by the processor 102. In an example, the instructions when executed by the processor cases the processor to implement the multi-cloud management platform in the multi-cloud environment. The instructions when executed by the processor 102 cause the processor 102 to receive a migration request from a network administrator. In an example, the migration request may be received through a Graphical User Interface (GUI) or Command Line Interface (CLI) of the multi-cloud management platform. The migration request indicates a destination cloud network and a compute node to be migrated from a source cloud network to the destination cloud network. In an example, a compute node identifier of the compute node and a unique identifier of the destination cloud network may be mentioned in the migration request. The compute node identifier may be a Media Access Control (MAC) address of the compute node and the unique identifier of the destination cloud network may be a Globally Unique Identifier (GUID). In some examples, a unique identifier of the source cloud network may also be mentioned in the migration request.

On receiving the migration request, a virtual machine (VM) information is determined, based on the compute node identifier of the compute node indicated in the migration request. The VM information indicates a VM hosted at the compute node in the source cloud network, a storage volume associated with the VM, and a network address associated with the VM. In an example, the VM information may include an identifier of the VM, such as a GUID, memory pointers identifying the storage volume associated with the VM and an Internet Protocol (IP) address associated with the VM. In an example, the VM information may indicate a list of VMs hosted at the compute node in the source cloud network along with respective storage volumes and network address of the VMs.

After determining the VM information, the compute node, the VM, the storage volume, and the network address are registered at the destination cloud network, based on the migration request and the VM information. Registration of the compute node, the VM, the storage volume, and the network address in the destination cloud network includes updation of databases in the destination cloud network with the compute node identifier and the VM information. The compute node, the VM, the storage volume, and the network address are then deregistered from the source cloud network. Deregistration of the compute node, the VM, the storage volume, and the network address from the source cloud network includes deletion of the compute node identifier and the VM information from databases in the source cloud network. A migration successful message indicative of completion of migration of the compute node from the source cloud network to the destination cloud network is then generated.

Since, according to the present disclosure, the processing of the migration request takes place in a system other than the compute node, processing resources of the compute node are not consumed for performing migration-related operations. Hence, processing speed of the compute node is not adversely affected during migration. Also, the compute node remains online during migration thereby reducing downtime. Further, approaches discussed in the present disclosure, does not involve any manual intervention in identifying the VMs or remapping storage and network to the VMs after migration, thus reducing manual effort of network administrators in migrating compute nodes.

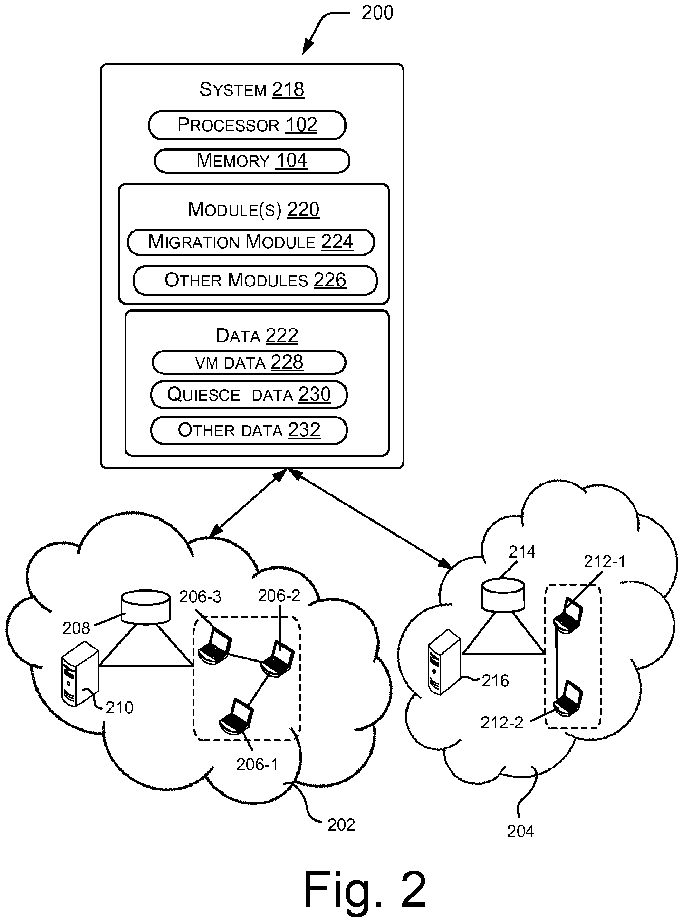

Fig. 2 illustrates a multi-cloud environment 200 according to an example of the present subject matter. The multi-cloud environment 200 includes a first cloud network 202 and a second cloud network 204. The first and second cloud networks 202 and 204 have cloud hosting capabilities. In an example, the first cloud network 202 may be provided by a first cloud service provider and the second cloud network 204 may be provided by a second cloud service provider.

As shown in Fig. 2, the first cloud network 202 includes compute nodes 206-1, 206-2, and 206-3, collectively referred to as compute nodes 206. Each of the compute nodes 206 may host one VM or more than one VM. Although, the first cloud network 202 is shown to include three compute nodes there may be more than three or less than three compute nodes in the first cloud network 202. The first cloud network 202 further includes a data storage device 208. Each of the compute nodes 206 may have a respective storage volume of the data storage device 208 associated with it. Although, the first cloud network 202 is shown to include one data storage device, there may be more than one data storage devices in the first cloud network 202. The first cloud network 202 also includes a first cloud controller 210 that can manage operations of the compute nodes 206 in the first cloud network 202. Although, the first cloud network 202 is shown to include one cloud controller, there may be more than one cloud controllers in the first cloud network 202.

As shown in Fig. 2, the second cloud network 204 includes compute nodes 212-1 and 212-2, collectively also referred to as compute nodes 212. Each of the compute nodes 212 may host one VM or more than one VM. Although, the second cloud network 204 is shown to include two compute nodes there may be more than two or less than two compute nodes in the second cloud network 204. The second cloud network 204 further includes a data storage device 214. Each of the compute nodes 212 may have a respective storage volume of the data storage device 214 associated with it. Although, the second cloud network 204 is shown to include one data storage device, there may be more than one data storage devices in the second cloud network 204. The second cloud network 204 also includes a second cloud controller 216 that can manage operations of the compute nodes 212 in the second cloud network 204. Although, the second cloud network 204 is shown to include one cloud controller, there may be more than one cloud controllers in the second cloud network 204.

The multi-cloud environment 200 further includes a system 218 for cloud migration. The system 218 can manage the first and second cloud networks 202 and 204 in the multi-cloud environment 200. The system 218 includes a processor 102 coupled to a memory 104. The processor 102 may be implemented as microprocessors, microcomputers, microcontrollers, digital signal processors, central processing units, state machines, logic circuitries, and any devices that manipulate signals based on operational instructions. Among other capabilities, the processor 102 is configured to fetch and execute computer-readable instructions stored in the memory 104.

The functions of the various elements shown in the Figure 2, including any functional blocks labeled as "processor(s)", may be provided through the use of dedicated hardware as well as hardware capable of executing software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and custom, may also be included.

The memory 104 may include any computer-readable medium known in the art including, for example, volatile memory (e.g., RAM), and/or non-volatile memory (e.g., EPROM, flash memory, etc.). Module(s) 220 and data 222 may reside in the memory 104. The module(s) 220 can be implemented as instructions stored on a computer readable medium and executable by a processor and/or as hardware. The module(s) 220 include routines, programs, components, data structures, and the like, which perform particular tasks or implement particular abstract data types.

The module(s) 220 include a migration module 224 which corresponds to instructions stored on a computer readable medium and executable by a processor to migrate a compute node from one cloud network to another cloud network, such as from a source cloud network to a destination cloud network. In an example, the migration module 224 includes different Application Programming Interfaces (APIs) associated with different cloud networks in the multi-cloud environment 200. For example, the migration module 224 may include a first set of APIs which can interact with the first cloud network 202 and may also include a second set of APIs which can interact with the second cloud network 204. The module(s) 220 also comprise other modules 226 that supplement applications on the system 218, for example, modules of an operating system.

The data 222 serves, amongst other things, as a repository for storing data that may be fetched, processed, received, or generated by the module(s) 220. The data 222 includes VM data 228 which stores data relating to GUIDs of VMs hosted in a compute node and information relating to storage and network associated with the VMs and quiesce data 230 which stores data relating to network/VM updation requests received by compute node(s) in a quiesce mode. The data 222 also comprises other data 232 corresponding to the other modules 226.

Consider that the compute node 206-1 is to be migrated from the first cloud network 202 to the second cloud network 204. Thus, the first cloud network may be referred to as a source cloud network 202 and the second cloud network may be referred to as a destination cloud network 204. In an example, the source cloud network 202 may be one of a public cloud, a private cloud, and a hybrid cloud and the destination cloud 204 network may be one of a public cloud, a private cloud, and a hybrid cloud. Further, the source cloud network 202 and the destination cloud network 204 may provide different types of cloud services, such as Infrastructure as a Service (laaS), Software as a Service (SaaS), and Platform as a Service (PaaS).

In operation, the migration module 224 receives a migration request from a network administrator. The network administrator may raise the migration request in a GUI or CLI provided by the migration module 224. The migration request indicates the destination cloud network 204 and the compute node 206-1 to be migrated to the destination cloud network 204. In an example, the migration request may include a compute node identifier, such as a MAC address of the compute node 206-1 to be migrated and a GUID identifying the destination cloud network 204.

The migration module 224 may identify the source cloud network 202 under which the compute node 206-1 is grouped from a mapping table stored in the system 218. The mapping table includes information relating to grouping of compute nodes under different cloud networks of the multi-cloud environment 200. In an example, the mapping table may include MAC addresses of compute nodes associated with corresponding GUIDs of cloud networks under which they are grouped.

On identifying the source cloud network 202, the migration module 224 determines a VM information based on the compute node identifier of the compute node 206-1 indicated in the migration request. In an example, the migration module 224 may invoke a set of APIs associated with the identified source cloud network 202 to determine the VM information. The VM information is indicative of a VM hosted at the compute node 206-1 in the source cloud network 202, a storage volume associated with the VM, and a network address associated with the VM. In an example, the VM information may include a VM identifier, such as a GUID, of the VM, a storage volume identifier, such as memory pointers, identifying the storage volume associated with the VM, and an Internet Protocol (IP) address associated with the VM. In an example, the VM information may indicate a list of VMs hosted at the compute node 206-1 in the source cloud network 202, respective storage volumes associated with the VMs, and respective network addresses associated with the VMs. In the following description, it is considered that the compute node 206-1 hosts a single VM, however, the following description applies mutatis mutandis to a compute node hosting multiple VMs.

The migration module 224, sets up the compute node 206-1 in a quiesce mode in the source cloud network 202. In the quiesce mode, requests related to updation of at least one of the VM, the storage volume, and the network address are paused from being processed in the source cloud network 202. In the quiesce mode, the compute node 206-1 remains in an online state and is available to receive requests related to updation of the VM, the storage volume associated with the VM, and the network address associated with the VM. However, such requests received in the quiesce mode are paused from execution. The requests received by the compute node while it is in the quiesce mode are called quiesced requests. The quiesced requests may be stored and queued up in a database of the system 218. The quiesced requests may be executed by the processor 102 after the compute node 206-1 is migrated to the destination cloud network 204. Thus, during migration of the compute node 206-1 from the source cloud network 202 to the destination cloud network 204, the compute node 206-1 is in the online state and is available to receive requests related to updation of at least one of the VM, the storage volume, and the network address, though, processing of such requests may be delayed.

After setting up the compute node 216-1 in the quiesce mode, the migration module 224 may perform a series of operations to register the compute node 206-1, the VM, the storage volume, and the network address in the destination cloud network 204. In an example, the migration module 224 may invoke a set of APIs associated with the destination cloud network 204 to perform the series of operations. The series of operations may include updation of a compute node database in the destination cloud network 204, where the compute node database stores a list of compute nodes grouped under the destination cloud network 204. The migration module 224 may update the compute node database in the destination cloud network 204 to include the compute node identifier, such as the MAC address of the compute node 206-1, as indicated in the migration request. Further, the migration module 224 may update a VM database in the destination cloud network 204 to include a VM identifier, such as a GUID, of the VM as indicated in the VM information. The VM database stores a list of VMs created in each of the computes nodes grouped under the destination cloud network 204. The migration module 224 may also update a storage volume database in the destination cloud network 204 to include a storage volume identifier, such as memory pointers, of the storage volume as indicated in the VM information. The storage volume database may store a list of storage volume identifiers associated with VMs created in the destination cloud network 204. Further, the migration module 224 may update a network address database in the destination cloud network to include the network address, as indicated in the VM information. The network address database may store a list of network addresses associated with VMs created in the destination cloud network 204. In an example, the compute node database, the VM database, the storage volume database, and the network address database may be stored in the data storage device 214 of the destination cloud network 204. On performing the series of steps mentioned above, the compute node, the VM, the storage volume, and the network address are registered in the destination cloud network 204.

The migration module 224 then associates the VM with the storage volume and the network address, after the VM, the storage volume, and the network address are registered in the destination cloud network 204. In an example, associating the VM with the storage volume and the network address includes establishing links between the VM database, the storage volume database, and the network address database in the destination cloud network 204.

The migration module 224 deregisters the compute node, the VM, the storage volume, and the network address from the source cloud network 202. In an example, the migration module 224 may invoke the set of APIs associated with the source cloud network 202 to remove the compute node identifier, the VM identifier, the storage volume identifier, and network address of the VM from respective databases of the source cloud network 202.

After the compute node 206-1, the VM, the storage volume, and the network address are deregistered from the source cloud network 202, the migration module 224 may process the quiesced requests related to updation of at least one of the VM, the storage volume, and the network address, in the destination cloud network 204. These quiesced requests were received by the system 218, prior to the compute node 206-1, the VM, the storage volume, and the network address being registered in the destination cloud network 204.

After processing the quiesced requests, the migration module 224, sets up the compute node 206-1 in a normal operation mode in the destination cloud network 204. In the normal operation mode, the compute node 206-1 is online and may process network/VM/storage updation requests, when they are received without processing of such requests being paused. Thus, the compute node 206-1 is moved out of the quiesce mode.

After the compute node 206-1 is set in the normal operation mode in the destination cloud network 204, the migration module 224 generates a migration successful message indicative of completion of migration of the compute node 206-1 from the source cloud network 202 to the destination cloud network 204. In an example, the migration successful message may be displayed in a display unit of the system 218. Thus, the compute node 206-1, its hosted VM(s), along with storage volume(s), and network addresses associates with its hosted VM(s) can be migrated from one cloud network to another cloud network in a multi-cloud environment.

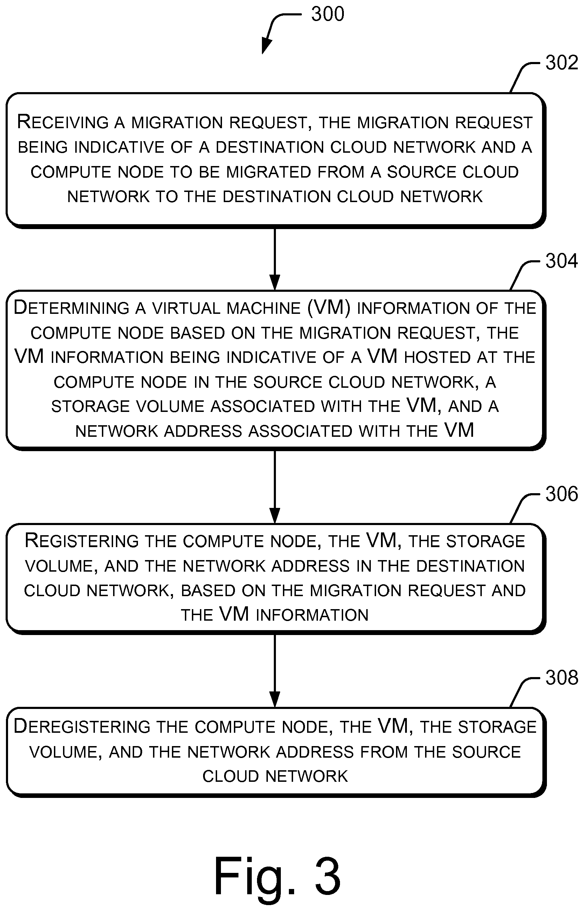

Fig. 3 illustrates a method 300 for cloud migration, according to an example. The method 300 enables migration of a compute node from a source cloud network, such as the source cloud network 202, to a destination cloud network, such as the destination cloud network 204. The method 300 can be implemented by processing resource(s) or computing device(s) through any suitable hardware, a non-transitory machine readable medium, or combination thereof. In an example, the method 300 may be performed by a migration module, such as the migration module 224 which includes instructions stored on a medium and executable by a processing resource, such as the processor 102, of a system, such as the system 100 or 218. Further, although the method 300 is described in context of the aforementioned system 100 or 218, other suitable systems may be used for execution of the method 300. It may be understood that processes involved in the method 300 can be executed based on instructions stored in a non-transitory computer readable medium. The non-transitory computer readable medium may include, for example, digital memories, magnetic storage media, such as a magnetic disks and magnetic tapes, hard drives, or optically readable digital data storage media.

Referring to Fig. 3, at block 302, a migration request is received by a processor, such as the processor 102, of a system, such as the system 100 or 218. The migration request indicates a destination cloud network, such as the destination cloud network 204, and a compute node, such as the compute node 206-1, to be migrated from a source cloud network, such as the source cloud network 202, to the destination cloud network. In an example, the migration request may include a compute node identifier, such as a MAC address, of the compute node to be migrated and a unique identifier, such as a Globally Unique Identifier (GUID), of the destination cloud network. The source and the destination cloud networks may be one of a public cloud, a private cloud, and a hybrid cloud.

At block 304, a virtual machine (VM) information of the compute node is determined based on the migration request. The VM information indicates a VM hosted at the compute node in the source cloud network, a storage volume associated with the VM, and a network address associated with the VM. In an example, the VM information may include an identifier of the VM, such as a GUID, memory pointers identifying the storage volume associated with the VM and an Internet Protocol (IP) address associated with the VM. In an example, the VM information may indicate a list of VMs hosted at the compute node in the source cloud network along with respective storage volumes and network address of the VMs.

On determining the VM information, the compute node may be set up in a quiesce mode in the source cloud network. In the quiesce mode, requests related to updation of at least one of the VM, the storage volume, and the network address are paused from being processed in the source cloud network. In the quiesce mode, the compute node remains in an online state and is available to receive requests related to updation of the VM, the storage volume associated with the VM, and the network address associated with the VM. Thus, the compute node is in an online state during the cloud migration, where in the online state the compute node is available to receive requests related to updation of at least one of the VM, the storage volume, and the network address, although such requests may not be processed during the migration.

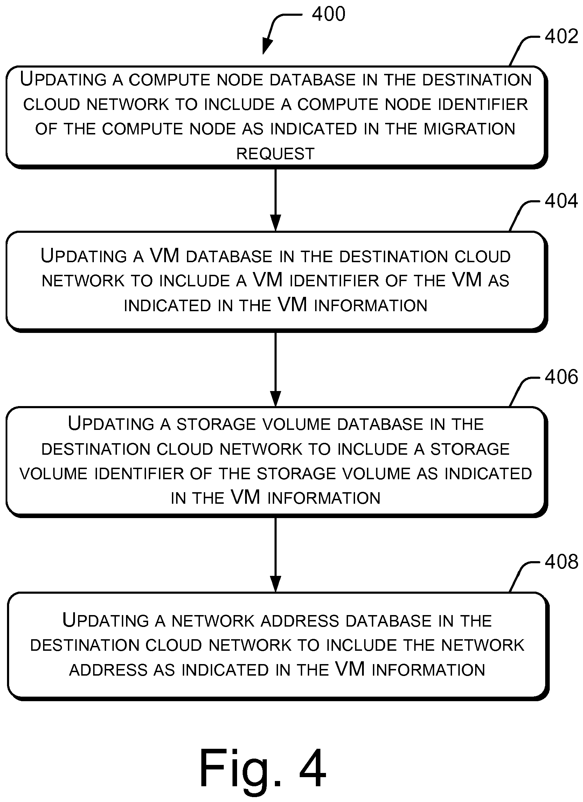

At block 306, the compute node, the VM, the storage volume, and the network address is registered in the destination cloud network, based on the migration request and the VM information, through the operations described in conjunction with Fig. 4. In an example, once the compute node, the VM, the storage volume, and the network address is registered in the destination cloud network, the VM is associated with the storage volume and the network address.

At block 308, the compute node, the VM, the storage volume, and the network address are deregistered from the source cloud network. In an example, identifiers associated with the compute node, the VM, the storage volume, and the network address are removed from respective databases of the source cloud network to perform the deregistration.

In an example, upon the compute node, the VM, the storage volume, and the network address being deregistered from the source cloud network, the compute node may be set in a normal operation mode in the destination cloud network. In the normal operation mode, the compute node is online and may process network/VM/storage updation requests, when they are received without processing of such requests being paused. Thus, the compute node 206-1 is moved out of the quiesce mode. Thus, after the compute node, the VM, the storage volume, and the network address are deregistered from the source cloud network, the requests related to updation of at least one of the VM, the storage volume, and the network address which were received while the compute node was in the quiesce mode, may be processed.

In an example, upon deregistering the compute node, the VM, the storage volume, and the network address from the source cloud network, a migration successful message indicating completion of migration of the compute node from the source cloud network to the destination cloud network may be generated.

Fig. 4 illustrates a method 400 for registering the compute node, the VM, the storage volume, and the network address in the destination cloud network, according to an example. In an example, steps of the method 400 may be performed by a migration module, such as the migration module 224.

In an example, in the method 400, a processor, such as the processor, 102, may update a compute node database in the destination cloud network to include a compute node identifier of the compute node as indicated in the migration request, at block 402. The compute node database stores a list of compute nodes grouped under the destination cloud network

At block 404, a VM database in the destination cloud network is updated to include a VM identifier of the VM as indicated in the VM information. The VM database stores a list of VMs created in each of the computes nodes grouped under the destination cloud network.

At block 406, a storage volume database in the destination cloud network is updated to include a storage volume identifier of the storage volume as indicated in the VM information. The storage volume database stores a list of storage volume identifiers associated with VMs created in the destination cloud network.

At block 408, a network address database in the destination cloud network is updated to include the network address as indicated in the VM information. The network address database stores a list of network addresses associated with VMs created in the destination cloud network. By performing the operations, as mentioned in blocks 402-408, the compute node, the VM, the storage volume, and the network address may be registered in the destination cloud network.

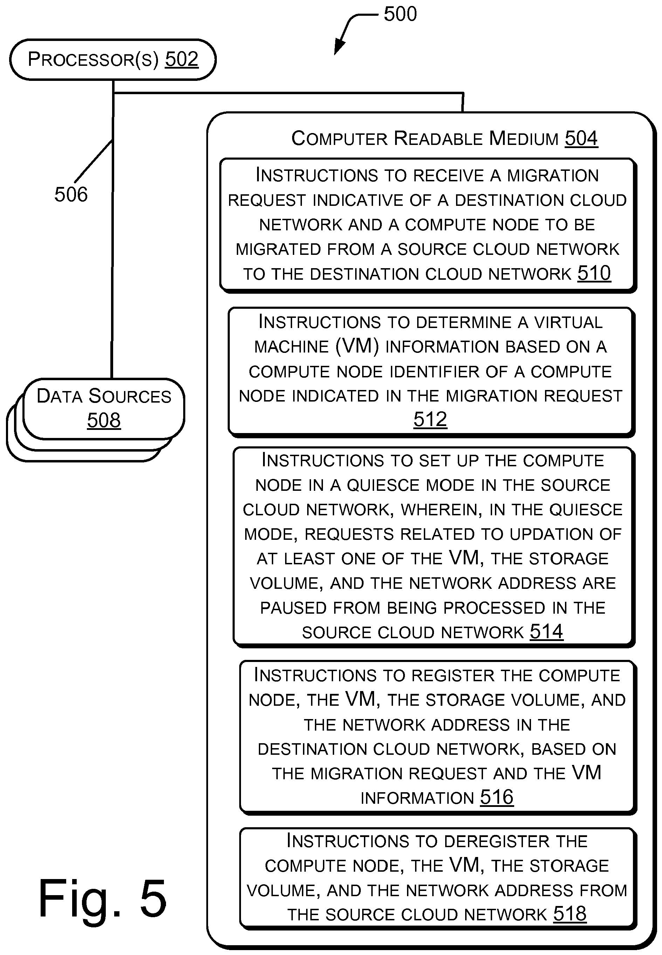

Fig. 5 illustrates a system environment 500 implementing a non-transitory computer readable medium for cloud migration, according to an example.

In an example, the system environment 500 includes processor(s) 502 communicatively coupled to a non-transitory computer readable medium 504 through a communication link 506. In an example, the system environment 500 may be a computing system, such as the system 100 or 218. In an example, the processor(s) 502 may have one or more processing resources for fetching and executing computer-readable instructions from the non-transitory computer readable medium 504.

The non-transitory computer readable medium 504 can be, for example, an internal memory device or an external memory device. In an example implementation, the communication link 506 may be a direct communication link, such as any memory read/write interface.

The processor(s) 502 and the non-transitory computer readable medium 504 may also be communicatively coupled to data sources 508 over the network. The data sources 508 can include, for example, memory of the system, such as the system 100 or 218.

In an example implementation, the non-transitory computer readable medium 504 includes a set of computer readable instructions which can be accessed by the processor(s) 502 through the communication link 506 and subsequently executed to perform acts for migrating a compute node, such as the compute node 206-1, from a cloud network, such as the source cloud network 202, to another cloud network, such as the destination cloud network 204. In an example, the source and destination cloud networks may be one of a public cloud, a private cloud, and a hybrid cloud.

Referring to Fig. 7, in an example, the non-transitory computer readable medium 504 includes instructions 510 that cause the processor(s) 502 to receive a migration request indicative of a destination cloud network and a compute node to be migrated from a source cloud network to the destination cloud network. The compute node may be grouped under the source cloud network and the source and destination cloud networks may be included in a multi-cloud environment. In an example, the system environment 500 may implement a multi-cloud management platform to manage the multi-cloud environment.

The non-transitory computer readable medium 504 includes instructions 512 that cause the processor(s) 502 to determine a virtual machine (VM) information based on a compute node identifier of a compute node indicated in the migration request. The VM information is indicative of a VM hosted at the compute node in the source cloud network, a storage volume associated with the VM, and a network address associated with the VM. The VM information may include identifiers associated with the VM, the storage volume, and the network address.

The non-transitory computer readable medium 504 includes instructions 514 that cause the processor(s) 502 to set up the compute node in a quiesce mode in the source cloud network. In the quiesce mode, requests related to updation of at least one of the VM, the storage volume, and the network address are paused from being processed in the source cloud network. Thus, in the quiesce mode, although the compute node available to receive the requests, processing of the requests is paused and may be resumed at a later point in time. The requests received by the compute node while it is in the quiesce mode may be referred to as the quiesced requests. Thus, during the operations of migration of the compute node from the source cloud network to the destination cloud network, the compute node is in an online and is available to receive requests related to updation of at least one of the VM, the storage volume, and the network address, though, processing of such requests may be delayed.

The non-transitory computer readable medium 504 includes instructions 516 that cause the processor(s) 502 to register the compute node, the VM, the storage volume, and the network address in the destination cloud network, based on the migration request and the VM information. Registering the compute node, the VM, the storage volume, and the network address in the destination cloud network includes updating a compute node database in the destination cloud network to include the compute node identifier as indicated in the migration request. The compute node database stores a list of compute nodes grouped under the destination cloud network. Then a VM database in the destination cloud network is updated to include a VM identifier of the VM as indicated in the VM information. The VM database stores a list of VMs created in each of the computes nodes grouped under the destination cloud network. A storage volume database in the destination cloud network is updated to include a storage volume identifier of the storage volume as indicated in the VM information. The storage volume database stores a list of storage volume identifiers associated with VMs created in the destination cloud network. A network address database in the destination cloud network is updated to include the network address as indicated in the VM information. The network address database stores a list of network addresses associated with VMs created in the destination cloud network.

In an example, once the compute node, the VM, the storage volume, and the network address are registered in the destination cloud network, the non-transitory computer readable medium 504 may include instructions that cause the processor(s) 502 to associate the VM with the storage volume and the network address.

The non-transitory computer readable medium 504 includes instructions 518 that cause the processor(s) 502 to deregister the compute node, the VM, the storage volume, and the network address from the source cloud network. In an example, the non-transitory computer readable medium 504 may include instructions that cause the processor(s) 502 to process the quiesced requests, related to updation of at least one of the VM, the storage volume, and the network address, in the destination cloud network, after the compute node, the VM, the storage volume, and the network address are deregistered from the source cloud network. After processing of the quiesced requests, the compute node is set to a normal operation mode. In the normal operation mode, the compute node is online to receive and process requests relating to updation of VM/storage/network, without the processing of such requests being paused.

Although implementations of present subject matter have been described in language specific to structural features and/or methods, it is to be noted that the present subject matter is not necessarily limited to the specific features or methods described. Rather, the specific features and methods are disclosed and explained in the context of a few implementations for the present subject matter.

## Claims

1. A method for cloud migration, comprising:
receiving a migration request, the migration request being indicative of a destination cloud network and a compute node to be migrated from a source cloud network to the destination cloud network;
determining a virtual machine (VM) information of the compute node based on the migration request, the VM information being indicative of a VM hosted at the compute node in the source cloud network, a storage volume associated with the VM, and a network address associated with the VM;
registering the compute node, the VM, the storage volume, and the network address in the destination cloud network, based on the migration request and the VM information; and
deregistering the compute node, the VM, the storage volume, and the network address from the source cloud network.

2. The method as claimed in claim 1, wherein the method further comprises:
prior to the registering, setting up the compute node in a quiesce mode in the source cloud network,
wherein, in the quiesce mode, requests related to updation of at least one of the VM, the storage volume, and the network address are paused from being processed in the source cloud network.

3. The method as claimed in claim 1, further comprising associating the VM with the storage volume and the network address, upon the VM, the storage volume, and the network address being registered in the destination cloud network.

4. The method as claimed in claim 1, wherein the compute node is in an online state during the cloud migration, wherein, in the online state, the compute node is available to receive requests related to updation of at least one of the VM, the storage volume, and the network address.

5. The method as claimed in claim 2, further comprising processing the requests related to updation of at least one of the VM, the storage volume, and the network address in the destination cloud network, after the compute node, the VM, the storage volume, and the network address are deregistered from the source cloud network.

6. The method as claimed in claim 1, wherein the method further comprises:
upon deregistering the compute node, the VM, the storage volume, and the network address from the source cloud network, generating a migration successful message indicative of completion of migration of the compute node from the source cloud network to the destination cloud network.

7. The method as claimed in claim 1, wherein registering the compute node, the VM, the storage volume, and the network address in the destination cloud network, comprises:
updating a compute node database in the destination cloud network to include a compute node identifier of the compute node as indicated in the migration request, wherein the compute node database is to store a list of compute nodes grouped under the destination cloud network;
updating a VM database in the destination cloud network to include a VM identifier of the VM as indicated in the VM information, wherein the VM database is to store a list of VMs created in each of the computes nodes grouped under the destination cloud network;
updating a storage volume database in the destination cloud network to include a storage volume identifier of the storage volume as indicated in the VM information, wherein the storage volume database is to store a list of storage volume identifiers associated with VMs created in the destination cloud network; and
updating a network address database in the destination cloud network to include the network address as indicated in the VM information, wherein the network address database is to store a list of network addresses associated with VMs created in the destination cloud network.

8. A system for cloud migration, comprising:
a processor; and
a memory coupled to the processor, the memory storing instructions executable by the processor to:
receive a migration request indicative of a destination cloud network and a compute node to be migrated from a source cloud network to the destination cloud network;
determine a virtual machine (VM) information based on a compute node identifier of the compute node indicated in the migration request, the VM information being indicative of a VM hosted at the compute node in the source cloud network, a storage volume associated with the VM, and a network address associated with the VM;
register the compute node, the VM, the storage volume, and the network address in the destination cloud network, based on the migration request and the VM information;
deregister the compute node, the VM, the storage volume, and the network address from the source cloud network; and
generate a migration successful message indicative of completion of migration of the compute node from the source cloud network to the destination cloud network.

9. The system as claimed in claim 8, wherein the processor is further to:
(i) set up the compute node in a quiesce mode in the source cloud network, prior to the compute node, the VM, the storage volume, and the network address being registered in the destination cloud network, wherein, in the quiesce mode, requests related to updation of at least one of the VM, the storage volume, and the network address are paused from being processed in the source cloud network; and/or
(ii) associate the VM with the storage volume and the network address upon the VM, the storage volume, and the network address being registered in the destination cloud network.

10. The system as claimed in claim 8, wherein the compute node is in an online state during the cloud migration, wherein, in the online state, the compute node is available to receive requests related to updation of at least one of the VM, the storage volume, and the network address wherein, optionally, the processor is further to process the requests related to updation of at least one of the VM, the storage volume, and the network address in the destination cloud network, after the compute node, the VM, the storage volume, and the network address are deregistered from the source cloud network.

11. The system as claimed in claim 8, wherein to register the compute node, the VM, the storage volume, and the network address in the destination cloud network, the processor is to:
update a compute node database in the destination cloud network to include the compute node identifier as indicated in the migration request, wherein the compute node database is to store a list of compute nodes grouped under the destination cloud network;
update a VM database in the destination cloud network to include a VM identifier of the VM as indicated in the VM information, wherein the VM database is to store a list of VMs created in each of the computes nodes grouped under the destination cloud network;
update a storage volume database in the destination cloud network to include a storage volume identifier of the storage volume as indicated in the VM information, wherein the storage volume database is to store a list of storage volume identifiers associated with VMs created in the destination cloud network; and
update a network address database in the destination cloud network to include the network address as indicated in the VM information, wherein the network address database is to store a list of network addresses associated with VMs created in the destination cloud network.

12. The system as claimed in claim 8, wherein the processor is to implement a multi-cloud management platform in a multi-cloud environment, wherein the multi-cloud environment comprises the source cloud network and the destination cloud network; and/or
wherein at least one of the source cloud network and the destination cloud network is one of a public cloud, a private cloud, and a hybrid cloud.

13. A non-transitory computer-readable medium comprising computer-readable instructions for cloud migration, the computer-readable instructions when executed by a processor, cause the processor to:
receive a migration request indicative of a destination cloud network and a compute node to be migrated from a source cloud network to the destination cloud network;
determine a virtual machine (VM) information based on a compute node identifier of a compute node indicated in the migration request, the VM information being indicative of a VM hosted at the compute node in the source cloud network, a storage volume associated with the VM, and a network address associated with the VM;
set up the compute node in a quiesce mode in the source cloud network, wherein, in the quiesce mode, requests related to updation of at least one of the VM, the storage volume, and the network address are paused from being processed in the source cloud network;
register the compute node, the VM, the storage volume, and the network address in the destination cloud network, based on the migration request and the VM information; and
deregister the compute node, the VM, the storage volume, and the network address from the source cloud network.

14. The non-transitory computer-readable medium as claimed in claim 13, wherein the computer-readable instructions when executed by the processor, further cause the processor to associate the VM with the storage volume and the network address upon the VM, the storage volume, and the network address being registered in the destination cloud network; and/or
wherein the computer-readable instructions when executed by the processor, further cause the processor to process the requests related to updation of at least one of the VM, the storage volume, and the network address in the destination cloud network, after the compute node, the VM, the storage volume, and the network address are deregistered from the source cloud network.

15. The non-transitory computer-readable medium as claimed in claim 13, wherein the instructions to register the compute node, the VM, the storage volume, and the network address in the destination cloud network, the processor when executed by the processor, cause the processor to:
update a compute node database in the destination cloud network to include the compute node identifier as indicated in the migration request, wherein the compute node database is to store a list of compute nodes grouped under the destination cloud network;
update a VM database in the destination cloud network to include a VM identifier of the VM as indicated in the VM information, wherein the VM database is to store a list of VMs created in each of the computes nodes grouped under the destination cloud network;
update a storage volume database in the destination cloud network to include a storage volume identifier of the storage volume as indicated in the VM information, wherein the storage volume database is to store a list of storage volume identifiers associated with VMs created in the destination cloud network; and
update a network address database in the destination cloud network to include the network address as indicated in the VM information, wherein the network address database is to store a list of network addresses associated with VMs created in the destination cloud network.
